# EUROPEAN PATENT APPLICATION

(11) **EP 3 073 651 A1**
(43) Date of publication of application: **28.09.2016**
(21) Application number: 14862333.3
(22) Date of filing: 11.07.2014
(51) Int. Cl.: H04B 10/116

(54) **INFORMATION SENDING/RECEIVING METHOD AND DEVICE FOR TERMINAL, AND TERMINAL**

(30) Priority: 18.11.2013 CN 201310578634
(71) Applicant: ZTE Corporation, Shenzhen, Guangdong 518057 (CN)
(72) Inventor: LU, Qing, Shenzhen Guangdong 518057 (CN)
(74) Representative: Mozzi, Matteo
(86) International application number: PCT/CN2014/082092
(87) International publication number: WO 2015/070628

(57) **Abstract**

Provided is methods and devices for sending and receiving information of terminals, and terminals, wherein the sending method includes that: information to be sent is converted into an optical signal by a flash lamp component, and the optical signal is sent to a terminal on a receiving side. By means of the technical solution provided by the disclosure, problems including a low transmission rate, poor usability, and so on existing in an existing communication method between terminals in the traditional art are solved and the efficiency of information transmission between terminals is improved. In the meanwhile, operations are simple and usability is also enhanced.

## Description

### Technical Field

The disclosure relates to the field of communications, particularly to methods and devices for sending and receiving information of terminals and terminals.

### Background

At present, communication methods applied between close-range handheld terminals include nothing else than Bluetooth and Wireless Fidelity (WiFi) technologies. In order to implement communication between two terminals according to the Bluetooth technology, it is necessary to turn on switches of Bluetooth components of the handheld terminals respectively, a Bluetooth device is searched subsequently, then the Bluetooth device is matched with a related device, and finally information that needs to be sent is selected and sent to a person who requires the information. The processing process is time consuming, and the Bluetooth transmission rate is not high, which is 24Mpbs claimed by a current Bluetooth 3.0 protocol, but an actual measured value is only 300KB.

It is also complicated to transmit information between handheld terminals through WiFi according to the WiFi technology, which not only has relatively high hardware and software requirements on the handheld terminals, but also requires that only a user having certain specialized knowledge can operate, thus resulting in poor usability.

Communication between terminals by using the WiFi technology specifically includes the following steps: firstly, a handheld terminal 1 creates a WiFi hotspot function, and a handheld terminal 2 accesses, through WiFi, a WiFi hotspot created by the handheld terminal 1; secondly, the handheld terminal 1 creates a File Transfer Protocol (FTP) through an application, and shares, through the FTP, information to be transmitted to the handheld terminal 2; and finally, the handheld terminal 2 downloads the required information by accessing the FTP.

It may be seen that, although a relatively high transmission rate can be provided by information transmission between handheld terminals using the WiFi technology, certain hardware and software support is required, and a user is required to have certain network knowledge, thus less usability is provided to an ordinary user than that provided by the Bluetooth technology.

At present, there is not effective solution for the problems in the traditional art.

### Summary

Embodiments of the disclosure provide methods and devices for sending and receiving information of terminals, and terminals so as to solve problems including a low transmission rate, poor usability, and so on existing in an existing communication method between terminals in the traditional art.

A method for sending information of a terminal is provided according to an embodiment of the disclosure so as to achieve the purpose above, wherein the terminal includes: a flash lamp component, and the method includes that: information to be sent is converted into an optical signal by the flash lamp component; and the optical signal is sent to a terminal on a receiving side.

Preferably, before the optical signal is sent to the terminal on the receiving side, the method may include that: a power supply voltage of the terminal is adjusted into a driving voltage required by the flash lamp component to send the optical signal.

Preferably, that the information to be sent is converted into the optical signal by the flash lamp component may include that: the information to be sent is converted into a modulating signal; the optical signal is modulated according to the modulating signal, and the modulated optical signal is used as the optical signal that is finally sent, wherein the modulated optical signal carries the information to be sent.

Preferably, the method may further include that: when it is detected that a temperature value of a light emitting element for sending the optical signal in the flash lamp component exceeds a preset threshold, an operation of reducing the temperature value is executed.

A method for receiving information of a terminal is further provided according to another embodiment of the disclosure so as to achieve the purpose above, wherein the terminal includes: an optical sensor component, and the method includes that: the optical sensor component receives an optical signal sent by a terminal on a sending side through a flash lamp component, wherein the optical signal carries information to be sent; and the optical signal is converted into an electric signal and the electric signal is parsed.

A device for sending information of a terminal is further provided according to another embodiment of the disclosure so as to achieve the purpose above, wherein the terminal includes a flash lamp component, and the device includes: a converting component configured to convert information to be sent into an optical signal by the flash lamp component; and a sending component configured to send the optical signal to a terminal on a receiving side.

A device for receiving information of a terminal is provided according to yet another embodiment of the disclosure so as to achieve the purpose above, wherein the terminal includes: an optical sensor component, and the device includes: a receiving component configured to receive, by the optical sensor component, an optical signal sent by a terminal on a sending side through a flash lamp component, wherein the optical signal carries information to be sent; and a converting component configured to convert the optical signal into an electric signal and parse the electric signal.

A terminal is further provided according to yet another embodiment of the disclosure so as to achieve the purpose above, including a central processing element, and a flash lamp component configured to perform a light supplementing operation for photographing, wherein the central processing element is coupled to the flash lamp component and configured to send to the flash lamp component an electric signal for indicating information to be sent, and the flash lamp component is configured to convert the electric signal into an optical signal and send the optical signal to a terminal on a receiving side.

Preferably, the flash lamp component may include: a flash lamp driving element configured to adjust a power supply voltage from a terminal power source into a driving voltage required by a light emitting element; a signal converting element configured to convert the information to be sent into a modulating signal of the light emitting element; the light emitting element configured to modulate the optical signal according to the modulating signal, wherein the modulated optical signal carries the information to the sent; and a logic control element configured to receive an operation instruction from the central processing element and send a control operation corresponding to the operation instruction to the signal converting element and the light emitting element.

Preferably, the light emitting element may be further configured to send an interruption instruction to the logic control element when it is detected that a temperature value of the light emitting element in the flash lamp component exceeds a preset threshold; and the logic control element may be further configured to take a measure to reduce the temperature value according to the interruption instruction.

A terminal is further provided according to another embodiment of the disclosure so as to achieve the purpose above, including a central processing element and an optical sensor component, wherein
the optical sensor component is configured to send, after receiving an optical signal sent by a terminal on a sending side through a flash lamp component and converting the optical signal into an electric signal, the electric signal to the central processing element, wherein the optical signal carries information to be sent; and the central processing element is configured to receive the electric signal.

Preferably, the optical sensing component may include: an optical sensor configured to receive the optical signal and convert the optical signal into the electric signal, and send the electric signal to a logic control element; and the logic control element configured to send the electric signal to the central processing element.

A terminal is further provided according to another embodiment of the disclosure so as to achieve the purpose above, including a central processing element, and a flash lamp component configured to perform a light supplementing operation for photographing, and an optical sensor component; the central processing element is configured to send to the flash lamp component an electric signal for indicating information to be sent; the flash lamp component is configured to convert the information to be sent into an optical signal and send the same to a terminal of a receiving side; and the optical sensor component is configured to receive the optical signal from the terminal on the sending side, and after converting the received optical signal into the electric signal, send the electric signal to the central processing element, wherein the received optical signal carries the information to be sent.

Preferably, the terminal may further include: a signal switching switch configured to receive a control instruction from the central processing element, and connect, according to the control instruction, the flash lamp component and the optical sensor component with the central processing element by means of time division multiplexing.

By means of the disclosure, a technical means that a flash lamp component in a terminal converts information to be sent into an optical signal or an optical sensor component receives the optical signal carrying the information to be sent solves problems including a low transmission rate, poor usability, and so on existing in an existing communication method between terminals in the traditional art, and improves the efficiency of information transmission between terminals. In the meanwhile, operations are simple and usability is also enhanced.

### Brief Description of the Drawings

The accompanying drawings illustrated herein are used for providing further understanding to the disclosure, and form a part of the present application. The schematic embodiments of the disclosure and description thereof are used for explaining the disclosure, instead of forming improper limitation to the disclosure. In the accompanying drawings:
Fig. 1 is a structural block diagram of a terminal according to the first embodiment of the disclosure;
Fig. 2 is another structural block diagram according to the first embodiment of the disclosure;
Fig. 3 is a structural diagram of a flash lamp component according to a preferred embodiment of the disclosure;
Fig. 4 is a flowchart of a method for sending information of a terminal according to the first embodiment of the disclosure;
Fig. 5 is a structural block diagram of a device for sending information of a terminal according to the first embodiment of the disclosure;
Fig. 6 is a structural block diagram of a terminal according to the second embodiment of the disclosure;
Fig. 7 is another structural block diagram of a terminal according to the second embodiment of the disclosure;
Fig. 8 is a structural diagram of an optical sensor component according to a preferred embodiment of the disclosure;
Fig. 9 is a flowchart of a method for receiving information of a terminal according to the second embodiment of the disclosure;
Fig. 10 is a structural block diagram of a device for receiving information of a terminal according to the second embodiment of the disclosure;
Fig. 11 is a structural block diagram of a terminal according to the third embodiment of the disclosure;
Fig. 12 is another structural block diagram of a terminal according to the third embodiment of the disclosure; and
Fig. 13 is another structural block diagram of a terminal according to a preferred embodiment of the disclosure.

### Detailed Description of the Embodiments

The disclosure will be expounded hereinafter with reference to the accompanying drawings and in combination with the embodiments. It needs to be noted that the embodiments in the disclosure and the characteristics in the embodiments may be combined with each other if there is no conflict.

The following embodiments may be applied in a handheld terminal, such as a tablet computer, and may be also applied in an existing mobile terminal applying a flash lamp, but is not limited thereby.

### Embodiment 1

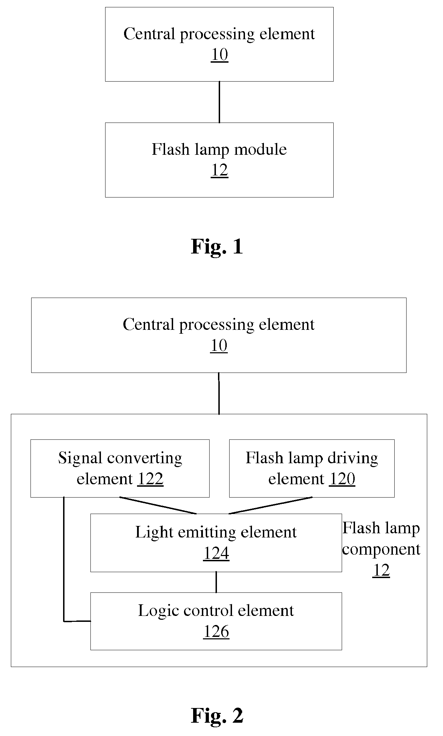

The present embodiment provides description from a perspective of information sending. Fig. 1 is a structural block diagram of a terminal according to the first embodiment. As shown in Fig. 1, the terminal includes: a central processing element 10, and a flash lamp component 12 configured to perform a light supplementing operation for photographing, wherein the central processing element 10 is coupled to the flash lamp component 12 and configured to send to the flash lamp component 12, an electric signal for indicating information to be sent, and the flash lamp component 12 is configured to convert the information to be sent into an optical signal and send the optical signal to a receiving side.

By means of the solution above, the flash lamp component arranged in the terminal may utilize the optical signal to transmit the information to be sent, thus implementing high speed transmission of the information, a simple operation and high usability.

In the present embodiment, as shown in Fig. 2, the flash lamp component 12 may include, but is not limited to the following processing elements:
a flash lamp driving element 120 configured to adjust a power supply voltage from a terminal power source into a driving voltage required by a light emitting element 124;
a signal converting element 122 configured to convert the information to be sent into a modulating signal of the light emitting element 124;
the light emitting element 124 configured to modulate the optical signal according to the modulating signal, wherein the modulated optical signal carries the information to the sent; and
a logic control element 126 configured to receive an operation instruction from the central processing element 10 and send a control operation corresponding to the operation instruction to the signal converting element 122 and the light emitting element 124. The logic control element 126 may be a Programmable Logic Controller (PLC).

In order to ensure normal communication between the terminals, the light emitting element 124 is further configured to send an interruption instruction to the logic control element 126 when it is detected that a temperature value of the light emitting element exceeds a preset threshold; and the logic control element 126 is further configured to take a measure to reduce the temperature value according to the interruption instruction.

Improvement of the flash lamp component 12 will be expounded below in combination with a preferred embodiment so that the improvement may be better understood.

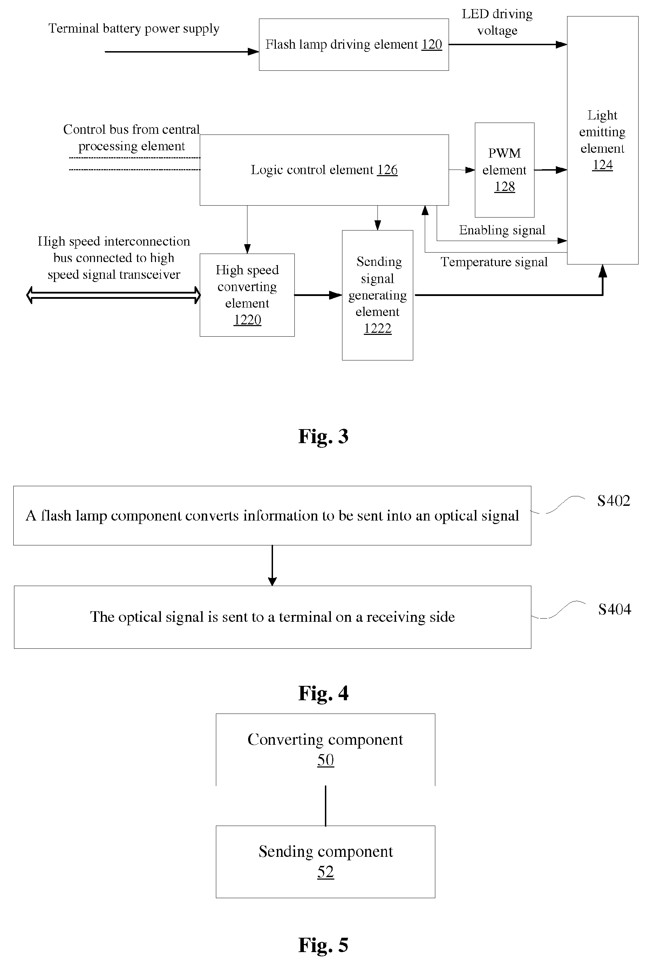

Fig. 3 is a structural diagram of a flash lamp component according to a preferred embodiment of the disclosure. As shown in Fig. 3, the flash lamp component includes: a flash lamp driving element 120, a light emitting element 124, a high speed signal converting element 1220, a sending signal generating element 1222, a logic control element 126 and a Pulse Width Modulation (PWM) element 128, wherein the high speed signal converting element 1220 and the sending signal generating element 1222 may be considered as two sub-elements of a signal converting element 122. In other words, the signal converting element 122 includes: the high speed signal converting element 1220 and the sending signal generating element 1222.

The flash lamp driving element 120 uses an internal voltage increasing chip to increase a voltage of a power supply from a terminal power source to a driving voltage required by the light emitting element 124. Generally, the voltage of the terminal power source (which is a battery, but is not limited to the battery) fluctuates in different use scenarios. The flash lamp driving element 120 monitors an input voltage at an input end and locks a low voltage so as to prevent the voltage fluctuation of the terminal power source. Overvoltage protection is provided at an output end of the flash lamp driving element 120 to implement an overvoltage protection function, thereby protecting a light emitting element (a Light-Emitting Diode (LED)) of the light emitting element 124 from being damaged.

The high speed signal converting element 1220 converts high speed signals (which are generally parallel signals of a Secure Digital Input and Output (SDIO) card interface, a Mobile Industry Processor Interface (MIPI) and so on, but are not limited by the two signals above) transmitted by the central processing element 10 into a serial signal. The sending signal generator 1222 modulates the series signal outputted by the high speed signal converting element 1220, performs equalization filtering, and level conversion so that the series signal may be used as modulating signals of the light emitting element 124.

The PWM element 128 is controlled by the logic control element 126. When the handheld terminal requires a flash lamp to flash or to be normally on, (i.e. communication can be performed without an improved flash lamp component 12), the logic control element 126 may fill a corresponding state value to a state register of the PWM element 128 so as to satisfy the requirement that the flash lamp flashes or is normally on.

The light emitting element 124 converts an electric signal into an optical signal and sends the optical signal to a transmitter, and requires that the flash lamp driving element 120 provides an appropriate driving voltage so that an LED serving as a light emitting source emits a light source with sufficient light intensity. In the meanwhile, the light emitting element 124, which generates a large amount of heat, is provided with a thermistor itself. Once a temperature of the light emitting element 124 exceeds a threshold temperature, an interruption signal is sent to the logic control element 126 to request for a corresponding disposal measure, such as starting a radiator, closing transmission and so on.

The logic control element 126, which is the control core of the whole improved flash lamp component, processes an operation instruction from the central processing element 10 by a control bus, and reports various kinds of interruption information to the central processing element 10 in time. The logic control element 126 sends various related control operations to the high speed signal converting element 1220, the sending signal generating element 1222 and the PWM element 128 according to operation instructions of the central processing element 10. In the meanwhile, the logic control element 126 also receives interruption including an overheat alarm and so on of the light emitting element 124.

The present embodiment further provides a method for sending information of a terminal based on the aforementioned structural features of the terminal. As shown in Fig. 4, the method includes the following steps.

Step 402: A flash lamp component converts information to be sent into an optical signal. A specific implementation process of the step may manifest as the following implementation form, but is not limited thereto: the information to be sent is converted into a modulating signal (e.g. an electric signal for indicating the information to be sent may be converted into the modulating signal); the optical signal is modulated according to the modulating signal, and the modulated optical signal is used as the optical signal that is finally sent, wherein the modulated optical signal carries the information to be sent.

Step 404: The optical signal is sent to a terminal on a receiving side.

In the present embodiment, it is also necessary to provide certain sending power support before the optical signal is sent. A power supply voltage of the terminal is adjusted into a driving voltage required by the flash lamp component to send the optical signal. The method may further include the following processing step: when it is detected that a temperature value of a light emitting element for sending the optical signal in the flash lamp component exceeds a preset threshold, an operation of reducing the temperature value is executed.

A device for sending information of a terminal is further provided in the present embodiment. As shown in Fig. 5, the device includes: a converting component 50 configured to convert information to be sent into an optical signal by a flash lamp component; and a sending component 52 connected to the converting component 50 and configured to send the optical signal to a terminal on a receiving side.

### Embodiment 2

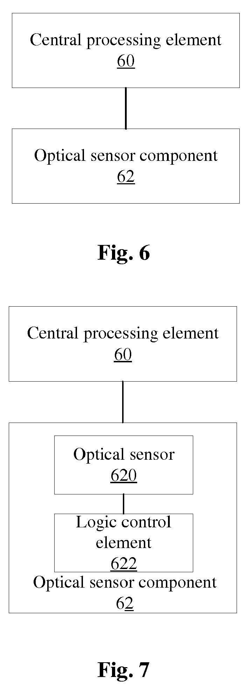

The present embodiment provides description from a perspective of information receiving. Fig. 6 is a structural block diagram of a terminal according to the second embodiment of the disclosure. As shown in Fig. 6, the terminal includes: a central processing element 60 and an optical sensor component 62, wherein the optical sensor component 62 is configured to send, after receiving an optical signal sent by the terminal on the sending side through a flash lamp component and converting the same into an electric signal, the electric signal to the central processing element 60, wherein the optical signal carries information to be sent; and the central processing element 60 is configured to receive the electric signal.

As shown in Fig. 7, the optical sensor component 62 in the present embodiment includes, but is not limited to the following processing elements: an optical sensor 620 configured to receive the optical signal and convert the optical signal into the electric signal, and send the electric signal to a logic control element 622; and the logic control element 622 configured to send the electric signal to the central processing element 60.

Improvement of the optical sensor component will be expounded below in combination with a preferred embodiment so that the improvement may be better understood.

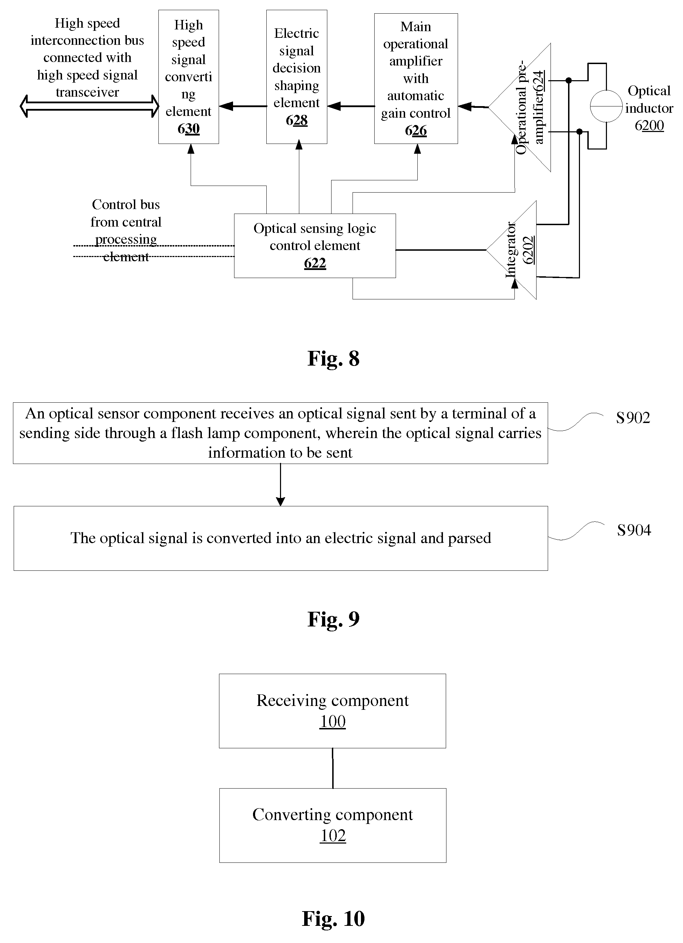

Fig. 8 is a structural diagram of an optical sensor component according to a preferred embodiment of the disclosure. As shown in Fig. 8, the optical sensor component includes the following processing elements: an optical inductor 6200, a current operational pre-amplifier 624 and a main operational amplifier 626, an electric signal decision shaping element 628, a high speed signal converting element 630, an integrator 6202, and a logic control element 622. It needs to be noted that the optical inductor 6200 and the integrator 6202 may be considered as sub-elements of an optical sensor 620. In other words, the optical sensor 620 includes the optical inductor 6200 and the integrator 6202.

The optical inductor 6200 converts an optical pulse signal sent by a flash lamp component into a weak current signal, and sends the same to the current operational pre-amplifier 624 and the integrator 6202 respectively.

The current operational pre-amplifier 624 performs low noise amplification on the received weak current signal, and sends an output signal to the main operational amplifier 626 with automatic gain control to perform secondary amplification so as to satisfy a requirement of subsequent decision of a circuit on the signal.

The electric signal decision shaping element 628 performs equalization filtering, and shaping decision on an electric signal which is outputted by the current operational pre-amplifier 624 and contains a noise and amplitude distortion.

The high speed signal converting element 630 performs serial-parallel conversion on an clean signal outputted by the electric signal decision shaping element 628, so as to adapt to a transmission requirement of an external high speed interconnection bus of a chip.

The integrator 6202 and the optical inductor 6200 form a function of a general optical sensor to calculate the brightness of a current environment, and upload information about the brightness to the logic control element 622.

The logic control element 622, which is the control core of the whole improved optical sensor component, operates registers of other elements in the improved optical sensor component and interferes operational progress of other elements so that all the elements operates in a coordinated and consistent manner. In the meanwhile, the logic control element 622 uploads current work information, an interruption operation and so on of the whole improved optical sensor component to a central processing element 60 through a control bus.

The present embodiment further provides a method for receiving information of a terminal based on the aforementioned structural features of the terminal. As shown in Fig. 9, the method includes the following steps.

Step 902: An optical sensor component receives an optical signal sent by a terminal on a sending side through a flash lamp component, wherein the optical signal carries information to be sent.

Step 904: The optical signal is converted into an electric signal and the electric signal is parsed.

A device for receiving information of a terminal is further provided in the present embodiment. As shown in Fig. 10, a receiving component 100 is configured to receive, by an optical sensor component, an optical signal sent by a terminal on a sending side through a flash lamp component, wherein the optical signal carries information to be sent; and a converting component 102 is connected to the receiving component 100 and configured to convert the optical signal into an electric signal and parse the electric signal.

It needs to be noted that a terminal in the first embodiment 1 and a terminal in the second embodiment may be combined into one terminal. In other words, the same terminal is provided with a sending function and a receiving function of an optical signal at the same time. At the moment, the central processing element 10 in the first embodiment and the central processing element 60 in the second embodiment 2 may be combined into one central processing element. Detailed description will be provided below in combination with the third embodiment so as to facilitate understanding.

### Embodiment 3

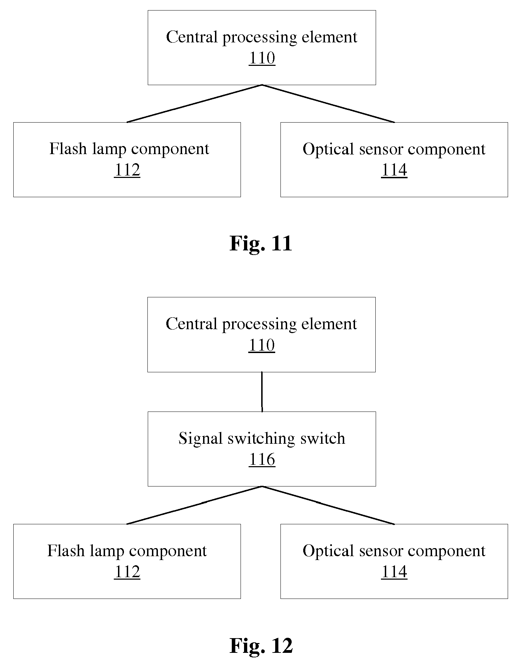

The present embodiment provides description from a perspective that a terminal is provided with a sending function and a receiving function of an optical signal at the same time. Fig. 11 is a structural block diagram of a terminal according to the third embodiment of the disclosure. As shown in Fig. 11, the terminal includes: a central processing element 110, a flash lamp component 112 configured to perform a light supplementing operation for photographing and an optical sensor component 114, wherein the central processing element 110 is configured to send information to be sent to the flash lamp component 112; the flash lamp component 112 is further configured to convert the information to be sent into an optical signal and send the optical signal to a terminal on a receiving side; the optical sensor component 114 is configured to receive the optical signal from the terminal on the receiving side, and after converting the received optical signal into an electric signal, send the electric signal to the central processing element, wherein the received optical signal carries the information to be sent. It needs to be noted that the central processing element 110 may be viewed as an integrated body of the central processing element 10 in the first embodiment and the central processing element 60 in the second embodiment, the flash lamp component 112 is equivalent to the flash lamp component 12 in the first embodiment and the optical sensor component 114 is equivalent to the optical sensor component 62 in the second embodiment.

In order to implement compatibility of sending and receiving, as shown in Fig. 12, the terminal in the present embodiment may further include: a signal switching switch 116 configured to receive a control instruction from the central processing element 110, and connect, according to the control instruction, the flash lamp component 112 and the optical sensor component 114 with the central processing element 110 by means of time division multiplexing.

Detailed description will be provided below in combination with a preferred embodiment so as to better understand the embodiment above.

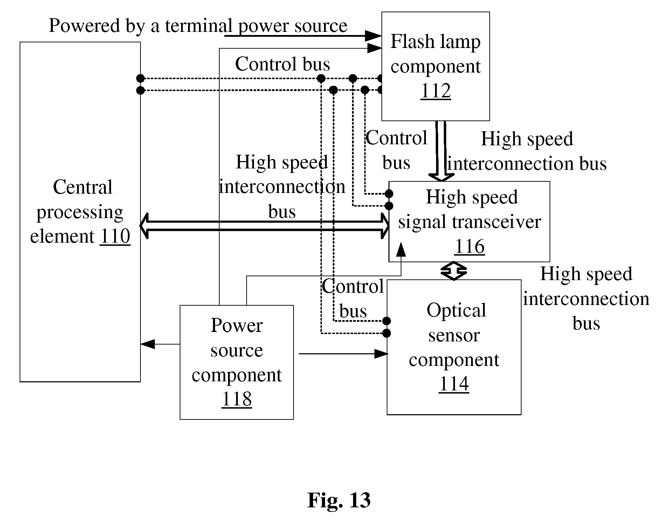

Fig. 13 is another structural block diagram of a terminal according to a preferred embodiment of the disclosure. As shown in Fig. 13, the terminal includes: a central processing element 110, a flash lamp component 112, a high speed signal transceiver 116 (i.e. a signal switching switch 116), an optical sensor component 114 and a power source component 118.

A power source (e.g. a battery) of the terminal is inputted into the power source component 118, and the power source component 118 provides required power for other components through an internal voltage increasing and decreasing circuit.

The central processing element 110 sends register operation instructions to the flash lamp component 112, the high speed signal transceiver 116, and an internal logic register (i.e. a logic control element) of the optical sensor component 114 through a control bus (e.g. Inter-Integrated Circuit (I2C), a Universal Asynchronous Receiver Transmitter (UART) and so on) to as to guide the components to complete corresponding actions. In the meanwhile, the flash lamp component 112 and the optical sensor component 114 may report related information including a current working state, an interruption operation and so on through the control bus.

The high speed signal transceiver 116 functions as a signal switching switch here, and controlled by the central processing element 110, the high speed signal transceiver 116 connects the central processing element 110 to high speed interconnection buses of the flash lamp component 112 and the optical sensor component 114 respectively so as to implement time division multiplexing of signal receiving and sending.

Besides functions of a common flash lamp, the flash lamp component 112 is controlled by the central processing element 110 to convert a high speed signal transmitted by the central processing element 110 through a high speed interconnection bus into an appropriate modulating signal of a light emitting element. The modulating signal modulates an optical pulse from the light emitting element, so that an emitted optical signal carries information that needs to be transmitted.

The optical sensor component 114 not only has functions of a common optical sensor, but also can send, after receiving the optical signal sent by the improved flash lamp component 112, a corresponding information frame to the central processing element 110 through a control bus. The central processing element 110 judges whether subsequent information is received. If the information needs to be received, the optical sensor component 114 notifies the improved optical sensor component 114 through the control bus, and enables the high speed signal transceiver 116 to switch connection of a high speed interconnection bus. The central processing element 110 receives corresponding communication information.

To sum up, embodiments of the disclosure implement the following beneficial effect:
a communication method between terminals according to the present embodiment may implement transfer of a file and information interaction between the terminals, especially transfer of a file with a large amount of information and a large capacity. Operations, which are simple and convenient, may be implemented easily like operating a terminal camera. Compared with the Bluetooth technology, a high transmission rate is achieved, and compared with the WiFi technology, a simple operating process is implemented, thus improving the usability. Good integration is implementation with a handheld terminal, a flash lamp generally applied by the handheld terminal is used as a transmission light source, and it is only necessary to add a related modulating circuit. In the meanwhile, an optical sensor generally applied by the handheld terminal is also improved so as to receive a high speed optical signal without electromagnetic radiation. Since the optical signal is transmitted between the terminals, there is no electromagnetic radiation. Bluetooth and WiFi working on a frequency of 2.4 have serious interference on an adjacent frequency band, especially in an electrical signal spectrum. The disclosure has strong interference resistance and the optical signal can be hardly interfered by an electric signal.

The above are only preferred embodiments of the disclosure, but are not used for limiting the disclosure. For those skilled in the art, the disclosure may have various variations and changes. Any modifications, equivalent replacements, improvements and the like made within the spirit and principles of the disclosure should be included in the protection scope of the disclosure.

### Industrial Applicability

The technical solutions provided by the embodiments of the disclosure apply a technical means that a flash lamp component in a terminal converts information to be sent into an optical signal or an optical sensor component receives the optical signal carrying the information to be sent, thus solving problems including a low transmission rate, poor usability, and so on existing in an existing communication method between terminals in the traditional art, and improving the efficiency of information transmission between terminals. In the meanwhile, operations are simple and usability is also enhanced.

## Claims

1. A method for sending information of a terminal, wherein the terminal comprises a flash lamp component and the method comprises:
converting information to be sent into an optical signal by the flash lamp component; and
sending the optical signal to a terminal on a receiving side.

2. The method according to claim 1, wherein before sending the optical signal to the terminal on the receiving side, the method comprises:
adjusting a power supply voltage of the terminal into a driving voltage required by the flash lamp component to send the optical signal.

3. The method according to claim 1, wherein converting the information to be sent into the optical signal by the flash lamp component comprises:
converting the information to be sent into a modulating signal;
modulating the optical signal according to the modulating signal, and using the modulated optical signal as the optical signal that is finally sent, wherein the modulated optical signal carries the information to be sent.

4. The method according to any one of claims 1 to 3, wherein the method further comprises:
when it is detected that a temperature value of a light emitting element, in the flash lamp component, for sending the optical signal exceeds a preset threshold, executing an operation of reducing the temperature value.

5. A method for receiving information of a terminal, wherein the terminal comprises an optical sensor component and the method comprises:
receiving, by the optical sensor component, an optical signal sent by a terminal on a sending side through a flash lamp component, wherein the optical signal carries information to be sent; and
converting the optical signal into an electric signal and parsing the electric signal.

6. A device for sending information of a terminal, wherein the terminal comprises a flash lamp component and the device comprises:
a converting component configured to convert information to be sent into an optical signal by the flash lamp component; and
a sending component configured to send the optical signal to a terminal on a receiving side.

7. A device for receiving information of a terminal, wherein the terminal comprises: an optical sensor component, and the device comprises:
a receiving component configured to receive, by the optical sensor component, an optical signal sent by a terminal on a sending side through a flash lamp component, wherein the optical signal carries information to be sent; and
a converting component configured to convert the optical signal into an electric signal and parse the electric signal.

8. A terminal, comprising a central processing element and a flash lamp component configured to perform a light supplementing operation for photographing,
the central processing element is coupled to the flash lamp component and configured to send to the flash lamp component an electric signal for indicating information to be sent, and
the flash lamp component is configured to convert the electric signal into an optical signal and send the optical signal to a terminal on a receiving side.

9. The terminal according to claim 8, wherein the flash lamp component comprises:
a flash lamp driving element configured to adjust a power supply voltage from a terminal power source into a driving voltage required by a light emitting element;
a signal converting element configured to convert the information to be sent into a modulating signal of the light emitting element;
the light emitting element configured to modulate the optical signal according to the modulating signal, wherein the modulated optical signal carries the information to the sent; and
a logic control element configured to receive an operation instruction from the central processing element and send a control operation corresponding to the operation instruction to the signal converting element and the light emitting element.

10. The terminal according to claim 9, wherein
the light emitting element is further configured to send an interruption instruction to the logic control element when it is detected that a temperature value of the light emitting element in the flash lamp component exceeds a preset threshold; and
the logic control element is further configured to take a measure to reduce the temperature value according to the interruption instruction.

11. A terminal, comprising a central processing element and an optical sensor component,
the optical sensor component is configured to send, after receiving an optical signal sent by a terminal on a sending side through a flash lamp component and converting the optical signal into an electric signal, the electric signal to the central processing element, wherein the optical signal carries information to be sent; and
the central processing element is configured to receive the electric signal.

12. The terminal according to claim 11, wherein the optical sensing component comprises:
an optical sensor configured to receive the optical signal and convert the optical signal into the electric signal, and send the electric signal to a logic control element; and
the logic control element configured to send the electric signal to the central processing element.

13. A terminal, comprising a central processing element, a flash lamp component configured to perform a light supplementing operation for photographing, and an optical sensor component;
the central processing element is configured to send to the flash lamp component an electric signal for indicating information to be sent;
the flash lamp component is configured to convert the information to be sent into an optical signal and send the optical signal to a terminal on a receiving side; and
the optical sensor component is configured to receive the optical signal from the terminal on the sending side, and after converting the received optical signal into the electric signal, send the electric signal to the central processing element, wherein the received optical signal carries the information to be sent.

14. The terminal according to claim 13, wherein the terminal further comprises:
a signal switching switch configured to receive a control instruction from the central processing element, and connect, according to the control instruction, the flash lamp component and the optical sensor component with the central processing element by means of time division multiplexing.
